# EUROPEAN PATENT SPECIFICATION

(11) **EP 1 253 054 B1**
(45) Date of publication and mention of the grant of the patent: **30.03.2005**
(21) Application number: 02252650.3
(22) Date of filing: 15.04.2002
(51) Int. Cl.: B60T 7/10, B60T 11/04

(54) **Brake tensioner**
Bremsseilspanner
Tendeur pour cables de frein

(30) Priority: 23.04.2001 GB 0109908
(43) Date of publication of application: 30.10.2002
(73) Proprietor: MG Rover Group Limited, Longbridge, Birmingham B31 2TB (GB)
(72) Inventor: Basnett, Michael Niel, Mardy, Abergavenny NP7 6NG (GB)
(74) Representative: Watts, Peter Graham

(56) References cited:
- WO-A-98/57832
- DE-A- 4 433 647
- US-A- 1 348 331
- US-A- 5 443 131

## Description

The present invention relates to a brake tensioner and in particular to a tensioner for use with a cable linkage including individual cables for controlling a pair of brakes on a common axle of a vehicle.

Such a device is for instance disclosed in US-A-5 443 131.

Brake tensioners have been proposed hitherto which act between a foot or hand controlled lever and the brake cables of a vehicle, the tensioner yielding so that a predetermined maximum tensile load will be applied to the cables when the foot or hand lever is applied. Hitherto, the tensioner has been connected to the cables via a equaliser bar. The use of an equaliser bar in this manner has several disadvantages, in particular, if one brake cable fails, then both brakes become inoperative. Furthermore, there are cost, weight, packaging and noise disadvantages in the use of an equaliser bar.

The present invention provides a yieldable tensioner device providing independent connection of each brake cable to a control lever by which tensile forces may be applied to the cables and the cables tensioned independently.

According to one aspect of the present invention a brake tensioner comprises an elongate member made of a material which will yield when a predetermined tensile load is applied thereto; characterised in that the elongate member is bent and twisted together adjacent its mid point, to produce an eye formation for engagement of a suitable fastener by which it may be attached to a brake control lever, the free ends of the elongate member diverging away from the eye formation and hook formations being provided at the free ends of the elongate member, each hook formation being adapted to engage an eye formation formed on the end of a brake control cable.

With the brake tensioner disclosed above, when the brake control lever is applied, if the tension increases above the predetermined tensile load at which the elongate member yields, the hook formations will yield, thereby limiting the tensile load applied to the cables and brakes.

In order to ensure that, within the working limits of the brake tensioner, the cables remained attached to the hook formations, means is provided for preventing the hook formations from yielding to less than 90 degrees. According to one embodiment, this is achieved by overbending the free ends of the elongate member, so that said ends are bent over 180 degrees. In order to facilitate attachment of the eye formations and the ends of the cables, the hook formations are formed by bending the free ends of the elongate member through more than 180 degrees, out of plane, for example, in the form of a helix.

According to a further embodiment of the invention, abutments are associated with the eye formations attached to the cables, in order to prevent the hook formations from straightening out as they yield. With this embodiment, upon yielding the free end of the elongate member must be drawn between the abutment and the body defining the eye formation. The abutment may be formed integrally of the eye formation or may be provided by means of a tubular shroud which surrounds the eye formation attached to the cable and the hook formation.

The eye formations on the cables may be secured thereto in any suitable manner, for example by swaging, brazing or welding or may be attached thereto by, for example, a nipple on the end of the cable engaging a suitably shaped aperture in the member defining the eye formation.

While the brake tensioner is designed for use on a pair of brake cables, it will function adequately with only one cable connected thereto. The brake tensioner will consequently function and operate one brake, if one of two cables breaks or may be used in a brake system with a single brake cable.

Preferably, the eye formation on the brake tensioner is secured to the brake control lever, by means of an adjuster which may be used to take up slack in the cables prior to actuation of the lever.

The invention is now described by way of example only, with reference to the accompanying drawings, in which
Figure 1 shows in side elevation, a hand brake lever with brake tensioner in accordance with the present invention;
Figure 2 shows a partial plan view of the hand brake assembly illustrated in Figure 1;
Figure 3 illustrates a modification to the brake tensioner illustrated in Figure 1; and
Figure 4 illustrates a further modification to the brake tensioner illustrated in Figure 1.

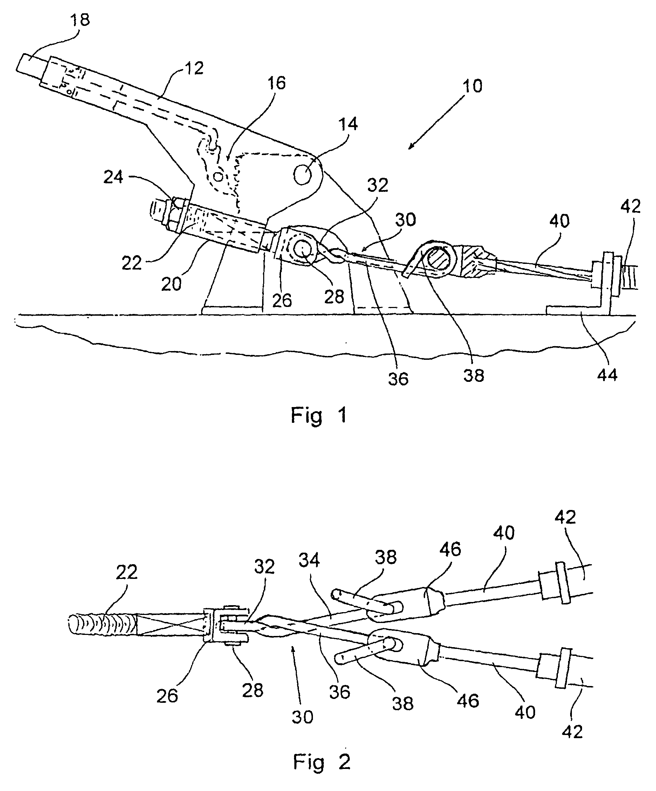

As illustrated in Figures 1 and 2, a hand brake 10 for a motor vehicle comprises a hand brake lever 12 which is pivotally mounted to the vehicle about pin 14. A rachet mechanism 16 is provided for retaining the hand brake 10 in the applied position, a release button 18 being provided to disengage the rachet mechanism 16 so that the brake may be released.

A tubular formation 20 is provided on the hand brake lever 12 for engagement of a screw adjuster 22. The screw adjuster 22 has a thread formation adjacent one end for engagement of a correspondingly threaded adjustment nut 24 and a clevis coupling 26 at the other end. A brake tensioner 30 is formed from a metal rod which will yield when a tensile load above a predetermined value is applied to the tensioner 30. The metal rod is bent at its mid point and twisted together to form an eye formation 32 which may be engaged by pin 28 of the clevis coupling 26, to attach the tensioner 30 to the adjuster 22. The free ends 34,36 of the tensioner 30 diverge away from the eye formation 32 the ends thereof being bent in helical manner through over 180 degrees, to form hook formations 38.

The outer sheaths 42 of a pair of brake cables 40 which are operatively connected to the rear brakes of the vehicle, are anchored to the vehicle adjacent the hand brake, by brackets 44. Eye formations 46 are secured to the ends of cables 40 by swaging or other suitable means. The eye formations 46 engage the hook formations 38 on the tensioner 30.

When setting up the hand brake, with the hand brake lever 12 released, the screw adjuster 22 is adjusted to take up any slack in cables 40. When the hand brake 12 is applied, if the tensile load applied to the cables 40 is in excess of that at which the tensioner 30 yields, the hook formations 38 will unwind, thereby limiting the tensile load applied to the cables 40. The bending of the hook formations over 180 degrees will prevent the hook formations from straightening out to less than 90 degrees, thereby preventing detachment of the eye formations 46.

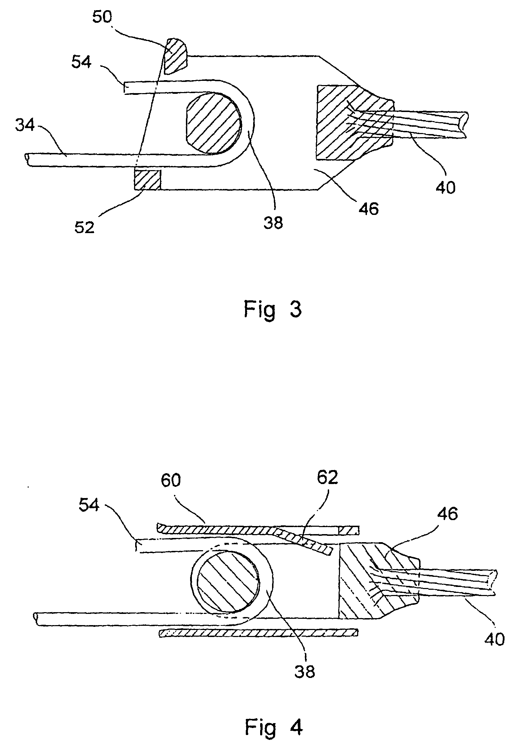

In the modification illustrated in Figure 3, abutments 50,52 are provided on the eye formations 46. The abutment 50 will prevent the free end 54 of the hook formation 38 from straightening out, so that the rod must be drawn between the eye formation 46 and abutment 50. With this embodiment, there is no need to overbend the rod to form the hook formation 38 nor to bend the hook formation out of plane to allow attachment to the eye formation 46.

In the further embodiment illustrated in Figure 4, a metal sleeve 60 surrounds the eye formation 46 and the hook formation 38 to provide an abutment preventing the unwinding of the hook formation 38. The sleeve formation 60 is provided with an indent 62 to engage the eye formation 46/hook formation 38 so as to retain the sleeve 60 in position.

Various modifications may be made without departing from the invention. For example, while in the embodiment disclosed, a screw adjuster is provided on the hand brake, the brake tensioner may alternatively be connected directly to the hand brake, means for adjusting slack in the cable being provided elsewhere.

Moreover, while the embodiments disclose the use of the tensioner with dual hand brake cables, the tensioner may alternatively be used to connect a single hand brake cable to the hand brake lever.

The brake tensioner in accordance with the present invention may also be used with, for example, a foot operated parking brake as opposed to a hand operated parking brake.

## Claims

1. A brake tensioner (30) comprising an elongate member made of a material which will yield when a predetermined tensile load is applied thereto; **characterised in that** the elongate member is bent and twisted together adjacent its mid point to produce an eye formation (32) for engagement of a suitable fastener (28) by which it may be attached to a brake control lever (12), the free ends of the elongate member diverging away from the eye formation (32) and hook formations (38) being provided at the free ends of the elongate member, each hook formation (38) being adapted to engage an eye formation (46) formed on the end of a brake control cable (40).

2. A brake tensioner (30) according to claim 1 **characterised in that** the eye formation (32) formed on the tensioner (30) is adapted to be connected to the brake control lever (12) via an adjuster mechanism (22,24).

3. A brake tensioner according to claim 1 or 2 **characterised in that** the eye formation (32) on the tensioner (30) is adapted to engage the pin (28) of a clevis coupling (26).

4. A brake tensioner according to any one of the preceding claims **characterised in that** the free ends of the elongate member are bent over 180 degrees, to form the hook formations (38).

5. A brake tensioner according to claim 4 **characterised in that** the free ends of the elongate member are bent through over 180 degrees out of plane.

6. A brake tensioner according to claim 5 **characterised in that** the free ends of the elongate member are bent in helical manner.

7. A brake tensioner according to any one of claims 1 to 3 **characterised in that** an abutment (50, 60) is provided on the eye formation (46) attached to the cable (40), the abutment (50,60) being adapted to prevent unwinding of the hook formation (38).

8. A brake tensioner according to claim 7 **characterised in that** the abutments (50) are formed integrally of the eye formation (46).

9. A brake tensioner according to claim 7 **characterised in that** a tubular sleeve (60) is provided around the eye formation (46) attached to the cable (40) and the hook formation (38), in order to prevent unwinding of the hook formation (38).

10. A brake tensioner according to claim 9 **characterised in that** an indent (62) is provided on the sleeve member (60) to locate the sleeve member (60) relative to the eye formation (46).

## Patentansprüche

1. Bremsseilspanner (30) mit einem länglichen Glied, das aus einem Material hergestellt ist, das nachgeben wird, wenn eine vorbestimmte Spannungsbelastung darauf ausgeübt wird, **dadurch gekennzeichnet, daß** das längliche Glied gebogen und zusammengedreht ist, in der Nähe seines Mittelpunkts, um ein Augengebilde (32) zu erzeugen, zum Eingriff eines geeigneten Befestigers (28), durch den es an einen Bremsbetätigungshebel (12) befestigt werden kann, wobei die freien Enden des länglichen Glieds von dem Augengebilde (32) weg auseinandergehen, und Hakengebilde (38) an den freien Enden des länglichen Glieds vorgesehen sind, wobei jedes Hakengebilde (38) angepaßt ist, um ein Augengebilde (46) in Eingriff zu nehmen, das an dem Ende des Bremsbetätigungsseils (40) ausgebildet ist.

2. Bremsseilspanner (30) nach Anspruch 1, **dadurch gekennzeichnet, daß** das Augengebilde (32), das an dem Seilspanner (30) gebildet ist, ausgelegt ist, um an dem Bremsbetätigungshebel (12) über einen Einstellmechanismus (22, 24) angeschlossen zu werden.

3. Bremsseilspanner nach Anspruch 1 oder 2, **dadurch gekennzeichnet, daß** das Augengebilde (32) an dem Seilspanner (30) ausgelegt ist, um den Stift (28) einer Zugösenverbindung (26) in Eingriff zu nehmen.

4. Bremsseilspanner nach einem der vorhergehenden Ansprüche, **dadurch gekennzeichnet, daß** die freien Enden des länglichen Glieds über 180° gebogen sind, um die Hakengebilde zu bilden.

5. Bremsseilspanner nach Anspruch 4, **dadurch gekennzeichnet, daß** die freien Enden des länglichen Glieds über mehr als 180° aus der Ebene gebogen sind.

6. Bremsseilspanner nach Anspruch 5, **dadurch gekennzeichnet, daß** die freien Enden des länglichen Glieds auf eine schraubenförmige Weise gebogen sind.

7. Bremsseilspanner nach einem der Ansprüche 1 bis 3, **dadurch gekennzeichnet, daß** ein Widerlager (50, 60) an dem Augengebilde (46) vorgesehen ist, das an dem Seil (40) befestigt ist, wobei das Widerlager (50, 60) angepaßt ist, um das Abwickeln des Hakengebildes (38) zu verhindern.

8. Bremsseilspanner nach Anspruch 7, **dadurch gekennzeichnet, daß** das Widerlager (50) einstückig mit dem Augengebilde (46) ausgebildet sind.

9. Bremsseilspanner nach Anspruch 7, **dadurch gekennzeichnet, daß** eine rohrförmige Manschette (60) um das Augengebilde (46) vorgesehen ist, das an dem Seil (40) und dem Hakengebilde (38) befestigt ist, um das Abwickeln des Hakengebildes (38) zu verhindern.

10. Bremsseilspanner nach Anspruch 9, **dadurch gekennzeichnet, daß** eine Vertiefung (62) an dem Manschettenglied (60) vorgesehen ist, um das Manschettenglied (60) relativ zu dem Augengebilde (46) anzuordnen.

## Revendications

1. Tendeur pour frein (30) comprenant un élément allongé réalisé à partir d'un matériau qui fléchira lorsqu'une charge de traction prédéterminée lui sera appliquée, **caractérisé en ce que** l'élément allongé est à la fois plié et tordu de façon adjacente à son point intermédiaire pour produire une formation en oeil (32) pour l'insertion d'un élément de fixation approprié (28) grâce auquel il peut être fixé à un levier de commande de frein (12), les extrémités libres de l'élément allongé s'écartant de la formation en oeil (32), et des formations en crochets (38) étant prévues aux extrémités libres de l'élément allongé, chaque formation en crochet (38) étant conçue pour recevoir une formation en oeil (46) formée sur l'extrémité d'un câble de commande de frein (40).

2. Tendeur pour frein (30) selon la revendication 1, **caractérisé en ce que** la formation en oeil (32) formée sur le tendeur (30) est conçue pour être reliée au levier de commande de frein (12) par l'intermédiaire d'un mécanisme de réglage (22, 24).

3. Tendeur pour frein selon la revendication 1 ou 2, **caractérisé en ce que** la formation en oeil (32) sur le tendeur (30) est conçue pour recevoir la goupille (28) d'un raccord par manille (26).

4. Tendeur pour frein selon l'une quelconque des revendications précédentes, **caractérisé en ce que** les extrémités libres de l'élément allongé sont repliées sur 180 degrés pour former les formations en crochets (38).

5. Tendeur pour frein selon la revendication 4, **caractérisé en ce que** les extrémités libres de l'élément allongé sont repliées sur 180 degrés en dehors du plan.

6. Tendeur pour frein selon la revendication 5, **caractérisé en ce que** les extrémités libres de l'élément allongé sont pliées de manière hélicoïdale.

7. Tendeur pour frein selon l'une quelconque des revendications 1 à 3, **caractérisé en ce qu'**une butée (50, 60) est prévue sur la formation en oeil (46) fixée au câble (40), la butée (50, 60) étant conçue pour empêcher un déroulement de la formation en crochet (38).

8. Tendeur pour frein selon la revendication 7, **caractérisé en ce que** les butées (50) sont formées de façon solidaire de la formation en oeil (46).

9. Tendeur pour frein selon la revendication 7, **caractérisé en ce qu'**une gaine tubulaire (60) est prévue autour de la formation en oeil (46) fixée au câble (40) et de la formation en crochet (38), de manière à empêcher un déroulement de la formation en crochet (38).

10. Tendeur pour frein selon la revendication 9, **caractérisé en ce qu'**un décrochement (62) est prévu sur l'élément de gaine (60) pour positionner l'élément de gaine (60) par rapport à la formation en oeil (46).
